(19) **Europäisches Patentamt**
**European Patent Office**
**Office européen des brevets**

(11) Publication number : **0 423 900 B1**

(12) **EUROPEAN PATENT SPECIFICATION**

(45) Date of publication of patent specification :
05.01.94 Bulletin 94/01

(51) Int. Cl.⁵ : **B09B 3/00**

(21) Application number : **90202783.8**

(22) Date of filing : **19.10.90**

(54) **Method for separating contaminants from soil.**

(30) Priority : **20.10.89 NL 8902599**

(43) Date of publication of application :
24.04.91 Bulletin 91/17

(45) Publication of the grant of the patent :
05.01.94 Bulletin 94/01

(84) Designated Contracting States :
**AT BE CH DE DK ES FR GB GR IT LI LU NL SE**

(56) References cited :
**DE-A- 3 336 980**
**GB-A- 456 432**
**US-A- 4 416 768**
**Miner. Process. Extr. Metall., Pap. Int. Conf.**
**1984 R.O. Burt et al.: "Spiralconcentration:**
**current trends in design and operation",**
**pages 117-127**

(73) Proprietor : **B.S.N. BODEMSANERING**
**NEDERLAND B.V.**
**Wetering 2**
**NL-6002 SM Weert (NL)**

(72) Inventor : **van der Waal, Ir. M.J.**
**Kustweg 320**
**NL-9933 BP Delfzijl (NL)**

(74) Representative : **Van kan, Johan Joseph**
**Hubert, Ir. et al**
**Algemeen Octrooibureau P.O. Box 645**
**Boschdijk 155**
**NL-5612 HB Eindhoven (NL)**

EP 0 423 900 B1

## Description

The invention relates to a method for separating contaminants from soil (or sand) by leading the contaminated soil through separating apparatus. More particularly the invention relates to a method for on the one hand separating heavy metals, and on the other hand separating organic contaminants from soil thus contaminated. Organic contaminants that may be mentioned are inter alia mineral oil, polyaromatic hydrocarbons, halogenated hydrocarbons and carbon particles.

A large number of techniques is known for purifying contaminated soil, which techniques can be divided into two groups. The first group comprises in situ techniques whereby the contaminated soil does not need be discharged and the soil is purified on-site by washing the soil or treating it with steam. Such in-situ techniques are described in "Handboek bodemsaneringstechnieken" (Handbook Soil Improvement Techniques), May 1988, pages 12 - 13. In accordance with a second group of techniques the contaminated soil is dug up and then processed in certain installations by heating or by extraction. Such purification techniques are also described in the above-mentioned Handboek, pages 13 - 22. With the extraction techniques extracting agents are used, which bring the contaminant into the liquid phase, which contaminated liquid can be purified more easily than the contaminated soil. Such a method is known from DE-A-3,336,980. With this purification it is not easy to remove all contamination from the soil; in particular organic or anorganic particles having a size comparable with that of sand grains are not easily or quickly removed. The disadvantage of the thermal treatment is that a lot of energy must be put into the soil, and that the organic remnants expelled as a result of heating must be burned or caught from the vapour and be further processed, before a flow of gas can be discharged. Furthermore it is impossible or difficult to remove metal particles by means of this method.

It has been attempted to find another method for purifying soil and the method now found is characterized in that the contaminant in the form of particles having a specific weight different from that of the soil is separated from the soil in a spiral separator. With this method the heavy metals are removed from the soil in the shape of particles having a specific weight higher than that of the soil, whilst the organic contaminants are removed from the soil in the shape of particles having a specific weight lower than that of the soil. Solid particles having a specific weight lower than that of the soil are for example the carbon particles which are often found in the soil. The carbon particles which are found in the soil adsorb contaminants, and if it is possible to separate said carbon particles from the sand, a great quantity of contaminant can be removed from the soil at the same time. This contaminant can also consist of metals or metallic compounds, adsorbed to the carbon particles and as such it can be separated as the light fraction.

The apparatus for removing contaminants from the soil used according to the invention, being the spiral separator, is an apparatus known per se, which so far has been used for extracting metals from ore-containing soils. Such spiral separators are described in "Perry's Chemical Engineers' Handbook", pages 21 - 27 to 21 - 29, sixth edition, 1984, McGraw-Hill Book Company. A detailed description of spiral separators is to be found in "The Humphreys Spiral Concentrator:, J.V. Thompson, Mining Engineering, January 1958, pages 84 - 87, in "The development of high efficiency spiral separators", B.J. Reaveley, I.C. Ritchie, Symp. Ser. -Austral. Min. Metall. 1986, 46, pages 87 - 97. For separating solid particles from ore, gravel and sand the spiral separator is known from British patent 456,432 (1935). From US-A-4,416,768 (1983) a spiral separator is known for separating materials from ground ore. In "Spiral concentration: current trends in design and operation." R.O. Burt, A.V. Yashin, Miner. Process. Extr. Metall, Pap. Int. Conf. 1984, pages 117 - 127 several uses for spiral separators have been indicated on page 125, but none of the indicated uses is concerning the purification of soil.

If the contamination is present in the shape of particles having a density different from that of sand or soil, the soil may be purified by directly supplying the soil to the spiral separator. If particles having too large a grain size are present the soil must first be sieved, because an excess of these comparatively large particles may have an adverse effect on the separating action of the apparatus. The contaminated particles can best be separated when their size is in the range of 50 μm - 3 mm. Contaminating particles which are smaller are difficult to separate by means of said apparatus, dependent on the type of spiral separator. Such parts which are too small must be separated from the sand or the soil by extraction or another technique in a preliminary process.

The spiral separators are capable of separating a flow of particles, mixed with a certain quantity of liquid, into a number of parallel flows, each flow containing a different concentration of particles having a certain density. Thus it is possible with a certain type of spiral separator to separate a flow mainly containing particles having a density which is lower than that of sand. Said light particles may be built up of carbon, tar products or another material. With another type of spiral separator it is possible to separate a flow that mainly contains particles having a density which is higher than that of sand. Said heavy particles may inter alia be built up of metals or metal compounds. The impurities may be further concentrated by means of both types of spiral separators, suitable for separating or concentrating particles having a density lower than that of sand and the particles having a density higher than that of sand. According to a first scheme it is possible to carry out one single separation adequately. Thus it is possible by means of a certain spiral separator to separate one fraction, rich in heavy particles, from contaminated soil, or a fraction rich in light particles. A different configuration of the spiral separator, however, makes it possible to effect a separation into at least three flows, whereby one flow mainly contains the heavy particles, another flow mainly contains the particles having a density between that of the heavy particles and that of the light particles (the sand fraction), whilst a final flow mainly contains the light particles.

In order to obtain the required final concentration of contaminating substances in the purified soil, the spiral separator can be adjusted such that a certain fraction of the particles to be removed is caught in one flow. As a result of said adjustment it is still possible that an undesirably large quantity of sand is carried along with said flow. In order to facilitate the processing (burning or storage) of said flow said flow may be concentrated in a second processing step. Said concentrating may be done by means of spiral separators again. As a result of said two-stage separation a certain fraction of contaminating particles can be separated in a first step, whilst in a second step said contaminating particles can be concentrated to form an acceptable concentration. The sand being released in said second step may be led back to the first separating step, or be added to the product emanating from the first separating step, as soil from which the undesirable light and/or heavy particles have been removed. Possibly said flow may be discharged as a separate product.

The invention will be further explained by means of the following description, wherein reference is made to the accompanying drawings, in which:

figure 1 diagrammatically illustrates the simplest embodiment according to the invention;

figure 2 diagrammatically illustrates an embodiment according to the invention, indicating a further processing of product flows from the spiral separator;

figure 3 illustrates a separation according to the invention, whereby two separators are arranged in series and whereby a contaminant having a lower specific weight than sand is separated;

figure 4 shows an embodiment comparable with the one illustrated in figure 3, whereby a contaminant having a higher specific weight than sand is separated, however; and

figure 5 diagrammatically illustrates a method whereby three spiral separators are positioned, and whereby it is possible to separate contaminants having a higher specific weigth than sand as well as contaminants having a lower specific weight than sand.

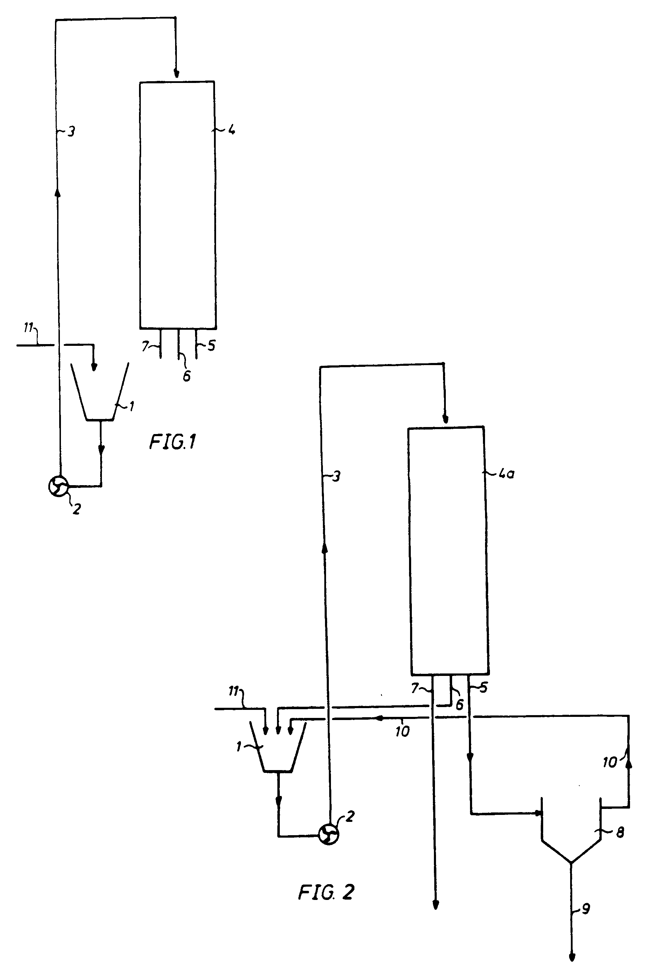

Figure 1 illustrates the simplest embodiment according to the invention, whereby one single spiral separator 4 is indicated, the specific spiral being selected in dependence on the contaminants to be separated. With contaminants having a lower specific weight than sand a different type of spiral is used than for separating contaminants having a higher specific weight than sand. To said spiral separator 4 a suspension of the contaminated soil is supplied via the conduit 3, which is in communication with a vessel 1 through the pump 2. The soil to be purified is supplied to said vessel 1 via the conduit 11. Near the outlet of the spiral separator 4 wedges were placed to act as separating elements, so that the flow of material to be discharged was separated into three flows, viz. the flow of concentrate 7, the medium fraction 6 and the residual fraction 5. The concentrate is the flow which is present at the inside of the spiral. The residual fraction 5 is the flow of material which is present at the outside of the spiral, and the medium fraction 6 is the flow of material which is present between the concentrate fraction 7 and the residual fraction 5. The experiments carried out showed that the largest concentration of water from the suspension supplied was present in the residual flow 5. Samples were taken from the fractions 5, 6 and 7, after which said fractions were partly or entirely led back to the vessel 1 for further experimenting.

Figure 2 diagrammatically illustrates a method for separating particles having a lower specific weight than sand from contaminated soil or contaminated sand, whereby those parts which have the same function as the parts of figure 1 have been given the same reference numbers. Contaminated sand is supplied via the conduit 11 in figure 2. Said sand is contaminated with carbon particles, whereby carbon must be considered to be an example of a contaminant having a lower specific weight than sand. In the vessel 1 the contaminated soil is processed into a suspension by adding water to said soil via the conduit 10. At the start of or during the purification it is also possible to supply additional water via a conduit (not shown) for supplying water. Any excess water may be discharged from the vessel 1 or the vessel 8, if necessary. The contaminated soil is supplied to the spiral separator 4a, via the conduit 3, by means of the pump 2. Via the conduit 7 purified or carbon-poor soil is discharged from the spiral separator 4a. Via the conduit 5 the heavily contaminated soil, having a higher carbon content than the soil which is supplied via the conduit 11, therefore, is discharged, said fraction also containing the largest quantity of water. The medium fraction 6 is led back to the vessel 1. Dependent on the setting of the wedges it is possible to regulate the sizes of the fractions 5, 6 and 7. The heavily contaminated soil which is discharged via the conduit 5 is supplied to a settler or cyclone 8, from which water is discharged at the upper side, via the conduit 10, said water being led back to the vessel 1, whilst the relatively small quantity of heavily contaminated soil is discharged, via the conduit 9, for further purification, or discharged to a depot.

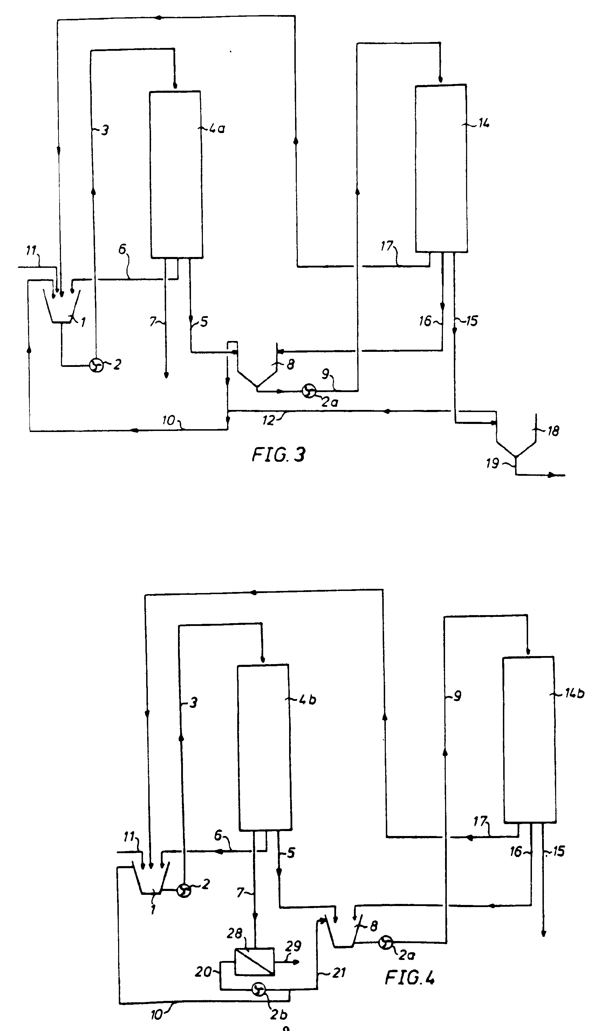

Figure 3 diagrammatically indicates an soil purifying plant comparable with the device indicated in figure 2, two spiral separator being connected in series in this case, however. With the device according to figure 3 it is possible to separate contaminants from the sand which have a lower specific weight than sand. Carbon is mentioned as an example of such a contaminant. In the first purifying step the carbon is almost completely removed from the contaminated soil, after which said removed carbon can be concentrated to be substantially sand-free in a second purifying step. This implies that the first purfifying step corresponds with the purification such as indicated in figure 2, whilst in this case the carbon-contaminated soil which is discharged from the settler 8 is carried to the second spiral separator 14 via the conduit 9. From the spiral separator 14 three fractions are obtained, of which the fraction having the highest sand content is led back to the vessel 1 via the conduit 17, or, if the purity of the sand to be discharged is sufficiently high, said sand may also be removed from the plant and be mixed with the sand fraction which is being discharged from the spiral separator 4 via the conduit 7. The fraction having the highest content of carbon particles, which fraction is substantially sand-free, is discharged to the separator 18 via the conduit 15. Said separator may e.g. be a settler or a cyclone. In the separator 18 water is removed from said fraction, said water being led back to the settler 8 via the conduit 16, and being recirculated, by means of the pump 2a and the conduit 9, to the spiral separator 14.

Figure 4 shows a diagram for separating contaminants which are heavier than sand (to be called metal hereinafter) from metal or metal compounds contaminated soil. This process is comparable with the method illustrated in Figure 3, whereby in this case the sand contaminated with metal is supplied to the vessel 1, however, and the concentrate discharged via the conduit 5 is further concentrated in a second spiral separator 14b. For this purpose metal-contaminated soil is supplied to the vessel 1 via the conduit 11, said soil having been converted into a suspension by means of a liquid, preferably water, in order that a good separation can be obtained in the spiral separator 4b. Said suspension is supplied to the spiral separator 4b, via the conduit 3, by means of the pump 2. Three fractions are discharged from the spiral separator 4b, viz. the flow with the low metal content via the conduit 7, which flow contains the largest quantity of water, said water being removed from the purified sand in the separating device 28, so that purified sand is discharged from the separator 28 via the conduit 29, and water is discharged via the conduit 20, which water can be led back to the vessel 1 by means of the pump 2b and the conduit 10. The medium fraction 6 is led back to the vessel 1 and the fraction 5 having a high metal content is supplied to the mixing vessel 8, in which said metal-rich fraction 5 is brought up to a required density again by adding water via the conduit 21. The metal-rich fraction is supplied to the second spiral separator 14b by means of the pump 2a, via the conduit 9, from which second spiral separator 14b three fractions are obtained, viz. the comparatively metal-poor fraction, which is led back to the vessel 1 via the conduit 17, the medium fraction which is led back to the vessel 8 via the conduit 16, and the metal-rich fraction 15, which is led towards a depot or which is further processed. When the sand-rich fraction from the conduit 18 is sufficiently purified it is also possible to combine it with the fraction which is discharged from the spiral separator 4 via the conduit 7, or to discharge said fraction directly as purified sand via the conduit 17.

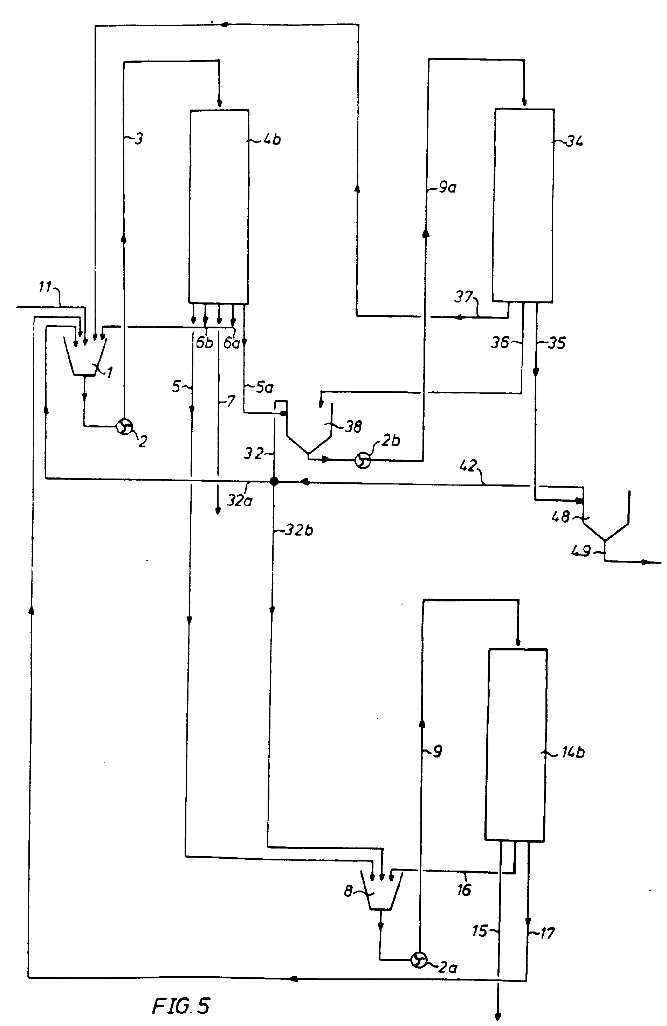

Figure 5 shows a diagram for purifying soil which is contaminated with particles having a lower specific weight than soil, such as carbon, as well as with particles having a higher specific weight than soil, such as metal or metal compounds. It is possible to purify such soil in a single spiral separator having a high separating power, but figure 5 shows a diagram whereby the purification of the soil is in principle carried out in two separate spiral separators, after three main fractions have been produced in a first spiral separator, being a sand fraction containing the carbon particles, a sand fraction containing the metal particles, and a medium fraction which is recirculated. For this purpose the soil contaminated with carbon particles and metal particles is supplied to the vessel 1 via the conduit 11, said soil being mixed into a processable suspension adding water. Said suspension is led to the spiral separator 4b by means of the pump 2, via the conduit 3. Five wedges are positioned in the spiral separator 4b, resulting in five fractions being obtained from said spiral separator 4b. The fraction having a low metal content as well as a low carbon content is discharged via the conduit 7, and can be de-watered in a separating process (not shown), or be discharged as purified soil. The metal-rich flow 5 is led to a mixing vessel 8, where water (or another liquid) is added in order to make the suspension processable as required, after which the metal-rich fraction is led to a second spiral separator 14b by means of the pump 2a and via the conduit 9, from which spiral separator 14b three fractions are obtained, being a sand-rich flow 17, which is led back to the vessel 1. On the other hand it is also possible, if the soil is sufficiently purified, that the fraction is discharged via the conduit 17, and is combined with the fraction emanating from the first spiral separator 4b. The metal-rich fraction from the spiral separator 14b is discharged via the conduit 15 and can be de-watered or be discharged as such towards a depot, or possibly be further processed. This metal-rich fraction still comprises only a minimum amount of sand. The medium fraction is led back, via the conduit 16, to the vessel 8, in order to be recirculated to the spiral separator 14b. The carbon-rich fraction from the spiral separator 4b is discharged via the conduit 5a, and said fraction contains the largest quantity of water and is led back to the settler 38, in which the water is separated and discharged via the conduit 32 blending into the conduit 32a, by means of which water is led back to the vessel 1, or blending into the conduit 32b, by means of which water is supplied to the vessel 8. From the settler 38 the partially de-watered carbon-rich soil is supplied, by means of the pump 2b, via the conduit 9a, to the spiral separator 34. From said spiral separator 34 three fractions are obtained, being the sand-rich fraction, which is led back to the vessel 1 via the conduit 37, or, if said fraction contains sufficient purified sand, it can be discharged from the process, possibly in combination with the fractions which are discharged via the conduit 7 and/or 17. The medium fraction is led back to the settler 38 via the conduit 36, and the carbon-rich fraction is de-watered, via the conduit 35, in the settler 48. The water from said settler 48 is recirculated to the conduits 32, 32a, 32b via the conduit 42. From the settler 48 te carbonrich fraction is discharged, via a conduit 49, to a depot or to a further purification, because hardly any sand is left in the fraction which is discharged via the conduit 49. The two medium fractions 6a and 6b which are obtained from the spiral separator 4b are led back to the vessel 1.

The invention will be further explained by means of the following examples.

Example I

Soil contaminated with polyaromatic hydrocarbons, adsorbed to solid particles, such as carbon particles, was sieved, so that stones and other coarse impurities were removed. Furthermore clay, humus and other particles having a particle size smaller than 50 μm were removed. The soil thus obtained, being contaminated with aromatic hydrocarbons, was supplied to the spiral separator as illustrated in figure 1. Via the conduit 3 soil, in the shape of a suspension of about 27 per cent by weight of soil in water, with 38.9 mg PAK/kg of dry matter (PAK = polyaromatic hydrocarbons), was supplied to the spiral separator. The wedges in the spiral separator 4 were positioned such that three fractions were obtained, so that via the conduit 7 a highly purified flow of sand, containing 4.9 mg PAK/kg of dry matter, was obtained, and via the conduit 5 a residual fraction containing 390 mg PAK/kg of dry matter was discharged. The medium fraction, which was discharged via the conduit 6, contained another 17.3 mg PAK/kg of dry matter. The flows of soil exiting via the conduits 7, 6 and 5 amounted to 66, 26 and 8 per cent respectively of the supplied flow of soil.

Example II

An amount of 25 tons soil contaminated with lead, originating from a clay-pigeon shooting range, contained lead particles having a size up to 2 mm. After a pre-purification, whereby clay and humus having a particle size of less than 50 μm were removed, said soil comprising 80 mg Pb/kg dry soil, was supplied to a spiral separator 4 such as indicated in figure 1, said spiral separator 4 being suitable for separating contaminants having a higher specific weight than sand. From the spiral separator 4 three fractions were obtained, being a concentrate containing 1655 mg Pb/kg of dry matter, a medium fraction containing 52 mg Pb/kg of dry matter, and a residual fraction containing 36 mg Pb/kg of dry matter. The three discharged flows of soil, being the residual fraction 7, the medium fraction 6 and the sand fraction 5 amounted to 2, 4 and 94 per cent respectively of the soil as supplied. The medium fraction and the sand fraction can be considered as purified soil.

Example III

An amount of 3000 tons of soil obtained by digging soil, contaminated with heavy metals, is pre-purified by extraction and then further treated in a spiral separator 4 as indicated in figure 1. This process is suitable for separating particles having a lower specific weight than sand.

The aqueous suspension supplied to the spiral separator 4, comprises the contaminants as given in the table expressed in mg/kg dry substance. From said spiral separator 4 three fractions have been obtained being 2% concentrate, 4% medium fraction adn 94% sand fraction. The composition of these flows obtained after the purification have also been given in the table.

TABLE

|  | starting material | concentrate | medium fraction | sand fraction |
|---|---|---|---|---|
| Cd | 0.9 | 4.0 | 0.6 | 0.3 |
| Cr | 5 | 150 | 2 | 3 |
| Cu | 6 | 920 | 4 | 12 |
| Pb | 49 | 1420 | 7 | 7 |
| Ni | 5 | 175 | 3 | 4 |
| Zn | 40 | 360 | 35 | 42 |

The medium fraction and the sand fraction have been united and can be considered as purified soil. The concentrate, in which the contaminants are strongly concentrated, comprises many carbon particles.

**Claims**

1. Method for purifying contaminated soil whereby the contaminated soil is passed through a separating device wherein contaminants are separated from the soil, characterized in that the contaminated soil is passed through a spiral separator in such a way that separation between soil and contaminants in said spiral separator is obtained due to the difference between the specific weight of the contaminant and the specific weight of the soil.

2. Method according to claim 1, characterized in that heavy metals are removed from the soil in the shape of particles having a higher specific weight than said soil.

3. Method according to claim 1, characterized in that the organic contaminants are removed from the soil in the shape of particles having a lower specific weight than said soil.

4. Method according to claim 1, characterized in that carbon particles are removed from the soil in the shape of particles having a lower specific weight than said soil.

5. Method according to claims 1 - 4, characterized in that several spiral separators are placed in series and/or that the contaminated soil is partially recirculated.

**Patentansprüche**

1. Verfahren zum Reinigen kontaminierter Erde, wobei die Erde durch eine Abtrenneinrichtung geleitet wird, in der die Verunreinigungen von der Erde getrennt werden,
   dadurch **gekennzeichnet,**
   daß die verunreinigte Erde durch einen Spiralabtrenner in der Weise geleitet wird, daß die Trennung zwischen Erde und Verunreinigungen in dem Spiralabtrenner aufgrund des Unterschieds zwischen dem spezifischen Gewicht der Verunreinigung und dem spezifischen Gewicht der Erde erreicht wird.

2. Verfahren nach Anspruch 1,
   dadurch **gekennzeichnet,**
   daß Schwermetalle von der Erde in der Form von Partikeln mit einem höheren spezifischen Gewicht als das der Erde entfernt werden.

3. Verfahren nach Anspruch 1,
   dadurch **gekennzeichnet,**

daß organische Verunreinigungen aus der Erde in der Form von Partikeln mit einem geringeren spezifischen Gewicht als das der Erde entfernt werden.

**4.** Verfahren nach Anspruch 1,
dadurch **gekennzeichnet**,
daß Kohlenstoffpartikel von der Erde in der Form von Partikeln mit einem geringeren spezifischen Gewicht als das der Erde entfernt werden.

**5.** Verfahren nach den Ansprüchen 1 bis 4,
dadurch **gekennzeichnet**,
daß mehrere Spiralabtrenner in Serie angeordnet werden und/oder daß die verunreinigte Erde teilweise wieder rückgeführt wird.

**Revendications**

**1.** Procédé de purification d'un sol pollué du type consistant à faire passer le sol pollué à travers un dispositif de séparation dans lequel les polluants sont séparés du sol, caractérisé en ce que le sol pollué est passé à travers un séparateur à spirale de telle sorte que la séparation entre le sol et les polluants dans ledit séparateur à spirale soit obtenue par la différence entre le poids spécifique des polluants et le poids spécifique du sol.

**2.** Procédé selon la revendication 1, caractérisé en ce que les métaux lourds sont extraits du sol sous la forme de particules présentant un poids spécifique plus élevé que celui du sol.

**3.** Procédé selon la revendication 1, caractérisé en ce que les polluants organiques sont extraits du sol sous la forme de particules présentant un poids spécifique inférieur à celui du sol.

**4.** Procédé selon la revendication 1, caractérisé en ce que les particules de carbone sont extraits du sol sous la forme de particules présentant un poids spécifique inférieur à celui du sol.

**5.** Procédé selon la revendication 1 à 4, caractérisé en ce que plusieurs séparateurs à spirale sont montés en série et/ou en ce que le sol pollué est partiellement recyclé.

FIG.1

FIG. 2

8

EP 0 423 900 B1

FIG. 3

FIG.4

FIG. 5

10